# EUROPEAN PATENT SPECIFICATION

(11) **EP 1 017 015 B1**
(45) Date of publication and mention of the grant of the patent: **01.10.2003**
(21) Application number: 99121998.1
(22) Date of filing: 09.02.1996
(51) Int. Cl.: G06K 19/06

(54) **Method for checking patterns disposed on a material strip**
Verfahren zum Nachprüfen von auf einem materiellen Streifen gelegten Mustern
Méthode pour vérifier des formes disposées sur une bande matérielle

(43) Date of publication of application: 05.07.2000
(62) Divisional of application: 96904038.5
(73) Proprietor: Tetra Laval Holdings & Finance SA, 1009 Pully (CH)
(72) Inventor: Hilmersson, Anders, 224 77 Lund (SE)
(74) Representative: Müller, Hans-Jürgen, Dipl.-Ing.

(56) References cited:
- EP-A- 0 131 241
- EP-A- 0 440 129
- EP-A- 0 694 870
- US-A- 3 632 995
- US-A- 4 698 514
- GIBBS W W: "GRAY MATTER" SCIENTIFIC AMERICAN, vol. 270, no. 5, 1 May 1994 (1994-05-01), page 85 XP000447087

## Description

The present invention relates to a method for checking patterns disposed on a material strip according to the preamble of claim 1 and the use of a material strip according to claim 7.

It is already known in the art to control processing operations on a travelling material strip by means of control marks printed on the strip which can be detected by photocells or other optical devices. These patterns which are disposed on the material strip are usually printed in a color tone which contrasts with the surroundings, thus enabling the detection means to detect the exact position of the patterns and therefore defining the current position of the material strip. These patterns can also be made with magnetically sensible material or with the help of patterns sensible by mechanical means, for example holes, crease lines, slots etc.

By the detection of the exact position of the material strip it is possible to apply multicolour printing on the material strip and to adapt the position of the pictures. These pictures contain several colours which are printed on the material strip by the usage of several processing machines, each of them printing a certain colour on top of the picture in process which has been prepared by preceeding processing machines which have printed other colours on the material strip. Therefore, a multicolour picture can be created and printed on the material strip wherein the different colours overlay each other at the exact position.

Another use of the checking device or checking method, respectively, is to detect the exact position of the material strip in order to apply a certain printing pattern on top of the previously preprinted material strip at a certain point or in order to arrange a printed pattern and a crease line pattern which facilitates the folding in register with each other.

Further fields of application exist, for example, where a packaging material strip is to be advanced in a packaging machine or the like over exactly the length of pattern so as to obtain, on the one hand, the printed pattern in the same position on all packages, and to ensure, on the other hand, that the said crease line pattern coincides with the forming device of the packaging machine so that the folding of the material takes place along the crease lines which are predetermined in their position. In order to manufacture the material strip, like stamping holes, applying opening apertures or additional crease lines, it is necessary to know the exact position of the material strip as well.

Up to now, it is well known to provide such material strips with patterns which can be detected by sensors, thus determining the exact position of the strip. It is known from EP-A-O 131 241 and US 4 698 514 to use a pattern like a bar code with two groups of dark and light areas which succeed in the direction of the detection wherein the position of the dark areas and/ or the light areas of one group with respect to a related detector is displaced in regard to the dark areas and/or the light areas of another group with respect to another related detector. These detectors detect the existence of dark areas and/ or light areas and produce output signals which depend on the result of the detection. This is carried out by using one detector which activates, upon the detection of dark and/ or light areas, the other detector or which signals enable the signals of the other detector which detects the existence of dark and/ or light areas wherein the output signals of the second detector are forwarded into a shift register and compared with a predetermined sequence of signals. If the sequence of output signals is equal to the predetermined sequence of signals the comparator will output an activation signal which activates the above described processing machines which require the exact position of the material strip.

These patterns usually disturb the general appearance of a decor of the material strip and it is desirable therefore, to accommodate the control patterns within the existing decor or on a very small blank surfaces which, in principle, only comprise the control patterns. However, this has given rise to great problems since the elements adapted to sense the patterns conceive and register all parts of the decor as well as the control patterns with the consequence that many output signals are supplied by the second detector depending on the dark and/or light areas of the decor and the control pattern. Since these output signals have to be compared within a real-time procedure it is quiet likely to detect false signals by an undesired identity of a sequence of dark and/or light areas of the decor and the predetermined sequence of signals.

Consequently, the wrong position of the material strip is detected and the following processing machines destroy the decor or the material strip by getting the wrong information.

It has been another great problem that the control pattern should be as small as possible, in order to avoid the optical disturbance of the decor, but should avoid the detection of false signals.

Additionally, there is a need of the packaging industry to be independent from any control patterns and to detect the decor of the material strip by, for example, the decor itself.

It is an object of the present invention to provide a method for exactly and safely checking patterns disposed on a material strip in order to e.g. precisely detect the exact position of the material strip.

It is another object of the invention not to enlarge the size of the control pattern but to increase the reliability of the checking method.

It is moreover another object of the invention to provide a method for detecting the exact position of the material strip without any additional control patterns which could disturb the decor of the material strip.

Additionally, it is an object of the invention to increase the reliability of the method by using synergistically the outputs of the detectors.

The invention is characterized in claims 1 and 7. Preferred embodiments are characterized within the subclaims.

The invention is realized by using the output signals of at least two detectors, by combining the output signals to form a sequence of output signals in a predetermined way wherein each detector may enable the other detector to write output signals into a comparator upon detection of an edge of a dark or light area, and by comparing said sequence with a predetermined sequence, wherein the output signals comprise information concerning the dark and/or light areas.

This can be done by using the output signals of both detectors by combining them within the comparator. Upon detection of a dark area of one of the detectors a signal (e.g. a "1") is written into the comparator, upon the detection of a light area, another signal (e.g. a "O") is written into the comparator. Upon equivalence of the achieved sequence of output signals with a predetermined sequence of signals one or more actuators are activated.

This can also be done by using the output signals of one detector as a clock input for the comparator which enables a data input of the comparator to write output signals of the other detector into the comparator wherein the clock input is activated upon detection of an edge of one of the dark and/or light areas and vice versa. In order to ameliorate the reliability of the system the clock input can additionally be used as an output signal for the sequence of output signals which is compared with a predetermined sequence of signals and which depends on the transition of light to dark and dark to light areas. Consequently, the comparator receives a lot of output signals of more than one detector and therefore much better prevents the detection of false signals pretending to have detected the control pattern by detecting a sequence of dark and light areas within the decor on the material strip which is identical to the sequence of the control pattern. The comparator afterwards outputs an output signal upon equivalence of the sequence of output signals with the predetermined sequence of signals wherein the output signal activates one or more actuators of different strip treating machines.

The comparator can comprise a shift register which registers the exact lengths of information given by the detectors upon detection of the control pattern, thus enabling the output signal of the comparator upon identity of the output signals with the predetermined sequence of signals.

The present methods allow the treating of much more signals, preferably binary signals, in order to better distinguish the correct pattern from a false one without enlarging the area the pattern needs on the material strip.

The dark and/or light areas of the material strip can be parts of pictures, designs or array configurations and need not be explicitly separate control patterns which are placed deliberately on the material strip. Nevertheless, it is favourable to use a bar code of light and dark areas since the detection of these areas is most reliable. The respective dark and light areas of one group of pattern can be displaced with regard to the other group of dark and light areas with respect to the corresponding detectors. Both groups of patterns could be on the same height of the material strip if the detectors are displaced with respect to each other or for example at the top and bottom of the completed package if the detectors are displaced with respect to the patterns and themselves.

Sometimes it is helpful to enable the comparator to distinguish the pulses derived from the first detector from the output pulses (of the other group of areas) derived from the second detector. In order to solve this problem, the pulse of the first detector could be higher and/or longer or could be followed by a short secondary pulse each and/or by positive and negative (reverse) pulses, resp.

Especially advantageous embodiments of the present invention will be described in the following with reference to the enclosed drawings, wherein
- Figure 1: shows a schematic structure of a checking device together with a control pattern,
- Figure 2: shows preferred sizes of control pattern,
- Figure 3: shows the output signals of the detectors and the resulting sequence of signals within the comparator,
- Figure 4: shows another embodiment with respect to Figure 2,
- Figure 5: shows another embodiment with respect to Figure 2,
- Figure 6: shows two groups of control patterns displaced with respect to each other,
- Figure 7: shows different decors on the material strip used as control patterns.

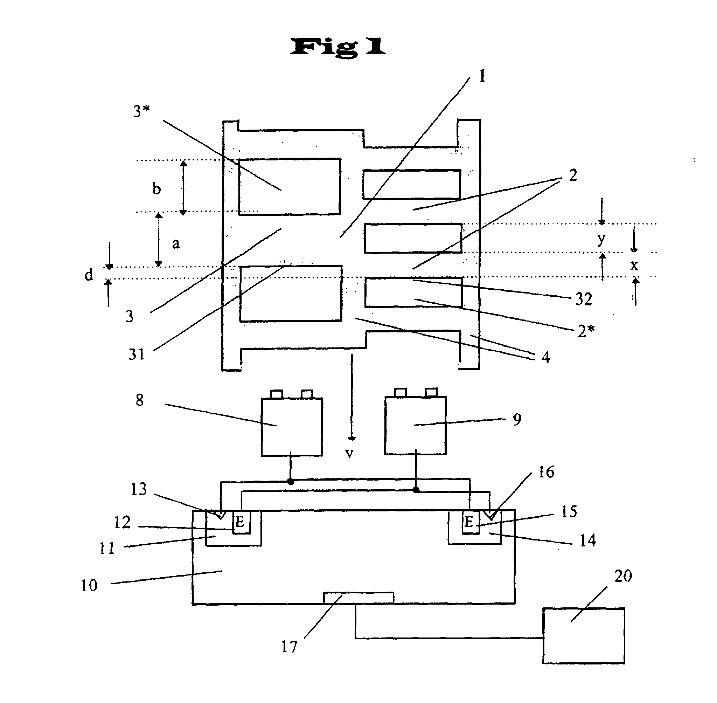

The upper part of Figure 1 shows a pattern 1 with dark areas 2 on the right side (first group) and dark areas 3 on the left side (second group) separated by light areas 2^{*} on the right side and light areas 3^{*} on the left side. The dark areas 2,3 are connected by connection areas 4 wherein the dark areas 2, are arranged horizontally and the connection areas 4 are arranged vertically crossing at an angle of 90°on the material strip. The dark areas 2 on the right side have the width x and the light areas 2^{*} on the right side have the width y. The dark and light areas 3 and 3^{*} on the left side have the width a and b, respectivelly. The distance between the edge 32 of a dark area 2 on the right side and the edge 31 of a dark area 3 on the left side is d. This arrangement constitutes a bar code used as a control pattern in order to detect the exact position of the material strip travelling in the direction v.

The control pattern is detected by two detectors 8 and 9 producing binary output signals upon the, detection of dark and/or light areas 2, 2^{*}, 3, 3^{*} or the edges 31, 32 of dark and/ or light areas wherein these output signals are proceeded to a comparator 10 comparing the sequence of output signals with a predetermined sequence of signals. The data inputs 13 and 16 are enabled throughout the clock inputs 12 and 15, respectively, thus enabling the detector 8 or 9, respectively, to write their output signals into the comparator 10, thus creating the sequence of output signals.

Upon the detection of a dark area 3 by the detector 8, the detector 8 is enabling the data input 16 throughout the clock input 15 wherein the detector 9 detects at the same time a white area 2^{*} and gives the respective information to the comparator 10 throughout the data input 16. Upon the detection of an edge of a black area 2, the detector 9 enables the data input 13 throughout the clock input 12 to receive information from the detector 8 detecting a dark area 3. This procedure is done vice versa until all dark 2,3, and/ or light areas 2^{*},3^{*} are detected and the respective information is inputted into the comparator 10. If the sequence of output signals from the detectors 8 and 9 is identical to a predetermined sequence of signals the output 17 is activated and signal is given to one or more actuators 20 which process the material strip, a tube formed by said material strip or the package afterwards.

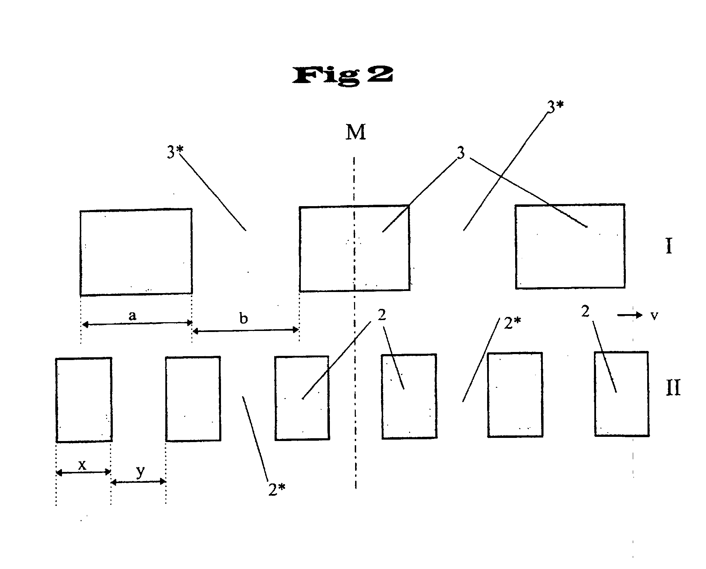

Figure 2 shows a preferred pattern of two groups of dark areas (2,3) e.g. black areas and light areas (2^{*}, 3^{*}) e.g. white areas which is symmetrical with regard to the center line M being situated perpendicularly with regard to the direction v of movement (parallel to the v-axis) of the web. The middle dark area 3 of the first group I and the middle light area 2^{*} of the second group II are crossed by the center line M which does not appear on the web. According to Fig. 2 the middle dark area 3 and its neighbour light area 3^{*} have double the width of said middle light area 2^{*} and its neighbour dark areas 2 and the next succeeding light areas 2^{*} and dark areas 2 at both sides of said center line M of Fig. 2. Here, the widths (a, b) of the first group of dark/ light areas (3,3^{*}) is twice as big as the widths (x, y) of the second group of dark/ light areas (2,2^{*}).

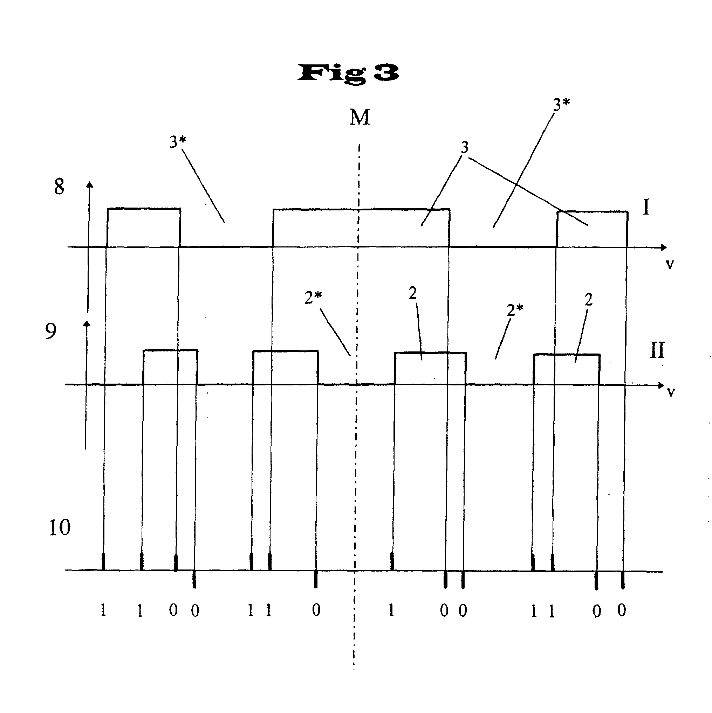

The creation of a sequence of output signals is shown within Figure 3 where the detector 8 and the detector 9 give binary signals upon the detection of dark and light areas. If the detector 8 detects a transission from light to dark it writes a "1" signal into the comparator 10 while the comparator 9 writes a "1" into the comparator 10 upon detection of a transission from light to dark as well. If the detector 8 detects a transission from dark to light it writes "O" into the comparator 10 as well as the detector 9 does. By doing so the output signals of both detectors are combined in a predetermined way namely the predetermined succession of "1" and "O" which is given by the shape and design of the bar code wherein the example of Figure 3 shows the succession "11001101001100". Here, a sequence of 14 bits is achieved within a very small and tiny bar code since both detectors write their output signals into the comparator 10. It is easy to understand that even more detectors and more patterns can be used to increase the number of bits within the predetermined sequence of output signals and thus ameliorating the reliability of the checking device.

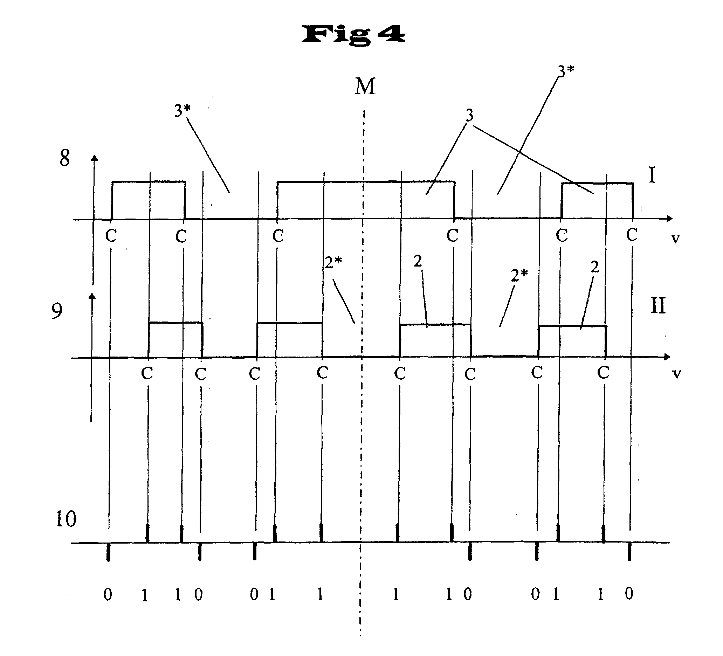

The creation of another sequence of output signals is shown within Figure 4 where the detector 8 and the detector 9 give binary signals upon the detection of dark and light areas. If the detector 8 receives a "1" input which is used as a clock signal C the present information of detector 9 (which is a _{"}O" at that time) is given to the comparator 10. If the detector 9 receives a "1" input which is also used as a clock input C the present information of detector 8 (which is a "1" at that time) is given to the comparator 10. After the detection of the whole bar code, used as a control pattern, the comparator received the input "0110 0111 1001 10" that means of 14 bits, thus more than 11 binary output signals.

This sequence of output signals which consist of binary signals is compared with a predetermined sequence of signals in order to activate the actuators 20. Usually, the first "0" is not used since the first transition from a light to a dark area might be too close to the decor. Therefore, the comparator contains a 13 bit information.

As can be seen from the method, the information received from one and the same control pattern is extended to 13 bit, thus ameliorating the reliability of the detection method. Therefore, the existing code can be used in a better way. While the material strip is travelling with a speed of several 100 meters per minute the photocells used as detectors 8 and 9 are able to detect light and dark areas with a frequency of about 10 kHz. Thus, the "speed" of the photocells is sufficiently high to read patterns 1 on a material strip which is proceeding with the above described speed. Consequently, the widths (a,b,x,y) of the dark and light areas can be reduced to a minimum enabling the user of the detection device and the detection method to use very small patterns which do not disturb the optical apperance of the decor placed on the material strip. The usual width a of successive dark areas 3 of one group is about the same as the width b of the successive light areas 3 of the same group which widths a, b are about twice the widths x, y of successive dark and light areas of another group. Preferably, the width x of the successive dark areas is about the same as the width y of the successive light areas, usually in the range of 1 to 3 mm wherein smaller or bigger widths can be detected depending upon the light source, supplying the photocells.

In order to create the sequence of output signals with respect to Figure 4 it is necessary that the edges of dark and light areas are situated on the strip 30 in such a way with regard to their related detector 8, 9 that when one detector 8, 9 detects an edge, e.g. the edge 32 of the frist group, the other detector 8, 9 does not detect an edge but a black or white area of the other group. Experiments have shown that an increasing number of checking bits within the comparator 10 increases the reliability of the checking method.

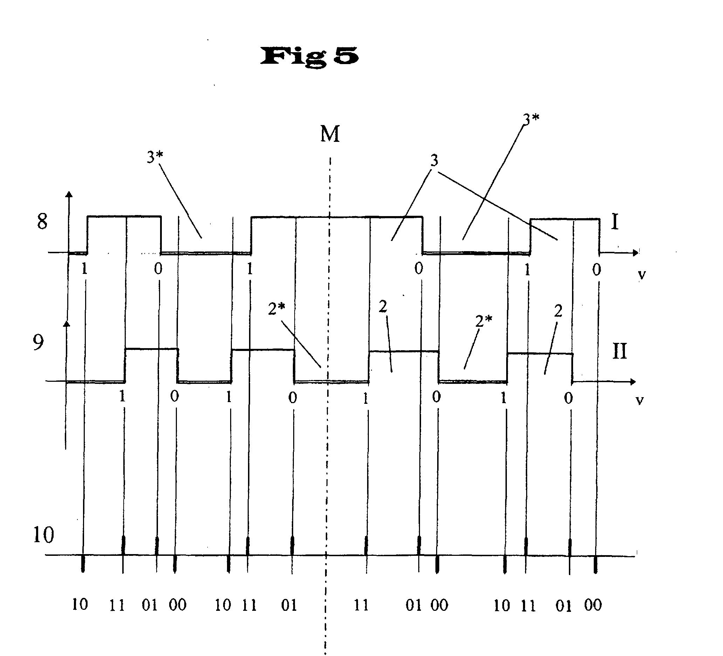

Figure 5 shows another embodiment of the checking method wherein both output signals of the detectors 8 and 9 are used, thus receiving the sequence of output signals: 1011 0100 1011 0111 0100 1011 0100.

Here, it can be seen that depending upon the method of using the output signals the reliability of the checking method can be increased rapidly by using the same control pattern. Here, the output signals which are derived from the detection of dark areas 2 and 3 and/or from the detection of positive edges (from light to dark areas) are represented by a "1" and the output signals which are derived from the detection of light areas 2 and 3 and/or from the detection of negative edges (from dark to light areas) are represented by a "O".

Figure 6 shows the arrangement of a control pattern which groups of dark and light areas are displaced with respect to their corresponding detectors 8,9 with regard to each other. Therefore, the different groups of pattern can be placed on different positions on the material strip which prevents the user from having a bar code on the material strip disturbing the optical impression of the decor.

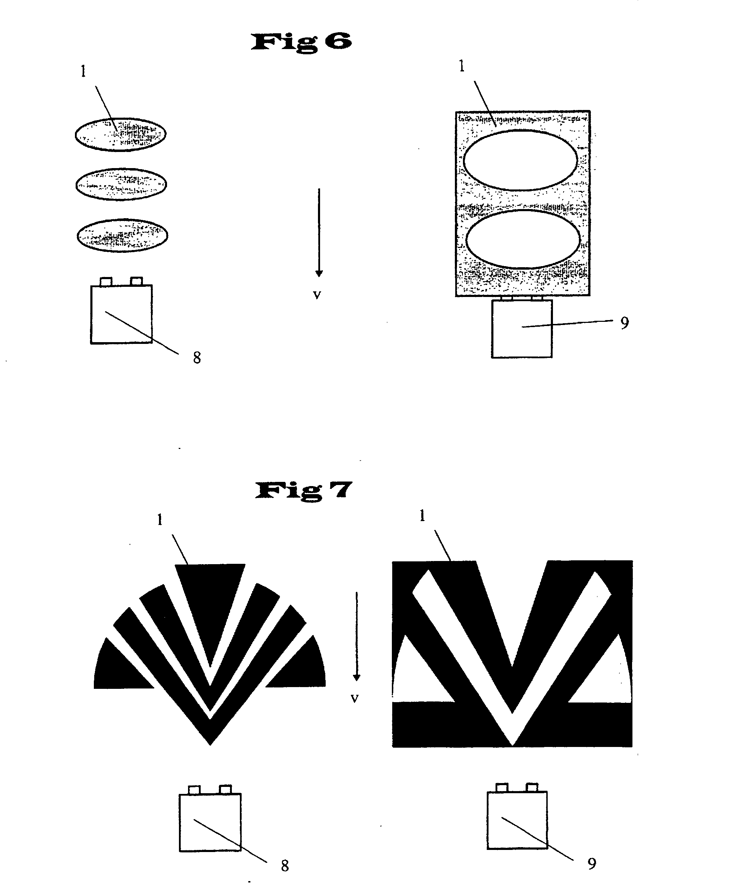

Moreover, the decor itself can be used for the checking method which is shown within Figure 7. Here, a certain decor, preferably consisting of white and dark areas, is used for the prescribed checking method wherein the respective groups of white and dark areas are displaced with respect to their corresponding detectors with regard to each other. Thus, the respective dark and/or light areas are parts of pictures, designs or array configurations on the material strip.

## Claims

1. Method for checking a pattern (1) disposed on a material strip (30) which pattern (1) consists of at least two groups of dark and light areas (2, 2^{*}, 3, 3^{*}), which dark and light areas succeed in the direction (v) of the checking,
the position of the dark areas (2) of one group with respect to a corresponding detector (9) being displaced compared to the position of the dark areas (3) of the other group with respect to another corresponding detector (8),
said method comprising the steps of
detecting the existence of dark areas (2, 3) and light areas (2^{*}, 3^{*}) of the two groups ;
producing output signals dependent on the result of the detection;
creating a sequence of output signals by combining detector output signals corresponding to said dark and light areas (2, 2^{*}, 3, 3^{*}) of the two groups and
comparing said sequence of output signals with a predetermined sequence of signals,
**characterized in that**,
said combining step involves determining the binary level of one detector when the other detector senses an edge transition and vice versa and/ or determining edge transitions of said at least two groups of dark and light areas (2, 2^{*}, 3, 3*).

2. Method as claimed in claim 1,
**characterized in that**
each detector (8, 9) is activated by the other detector (8, 9) upon detection of an edge transition of one of said dark or light areas (2, 2^{*}, 3, 3^{*}).

3. Method as claimed in claim 2,
**characterized by**
creating said sequence of output signals by the output signals of each detector (8, 9), comprising information concerning said dark or light areas (2, 2^{*}, 3, 3^{*}), and
activating each detector (8, 9) by the other detector (8, 9) after detecting an edge of one of said dark or light areas (2, 2^{*}, 3, 3^{*}) by the other detector (8, 9).

4. Method as claimed in one of the preceding claims,
**characterized by**,
the edge transitions of said dark and light areas (2, 2^{*}, 3, 3^{*}) are detected on said material strip (30) in such a way with regard to their related detectors (8, 9) that when one detector (8, 9) detects an edge transition the other detector (8, 9) does not detect an edge transition.

5. Method as claimed in one of the preceding claims,
**characterized by**
using binary signals as said output signals.

6. Method as claimed in claim 5,
**characterized by**
representing said output signals, derived from the detection of dark areas (2, 3) and/or from the detection of positive edges from light to dark areas, by a _{"}1" each and
representing said output signals, derived from the detection of light areas (2^{*}, 3^{*}) and/or from the detection of negative edges from dark to light areas, by a "0" each, or vice versa.

7. Use of a material strip (30) with a pattern (1) consisting of at least two groups of dark and light areas (2, 2^{*}, 3, 3^{*}) in the method as claimed in one of the preceding claims.

## Patentansprüche

1. Verfahren zum Nachprüfen von auf einem Materialstreifen (30) gelegten Muster (1), wobei das Muster (1 aus wenigstens zwei Gruppen von dunklen und hellen Bereichen (2, 2^{*}, 3, 3^{*}) besteht, wobei die dunklen und hellen Bereich aufeinanderfolgen in der Richtung (v) des Prüfens, die Position der dunklen Bereiche (2) einer Gruppe mit Bezug zu einem entsprechenden Detektor (9) im Vergleich zu der Position der dunklen Bereiche (3) der anderen Gruppe mit Bezug auf einen anderen Detektor (8) angeordnet wird,
wobei das Verfahren folgende Schritte aufweist:
Ermitteln der Existenz von dunklen Bereichen (2, 3) und hellen Bereichen (2^{*}, 3^{*}) der zwei Gruppen ;
Herstellen von Ausgangssignalen abhängig von dem Ergebnis der Ermittlung ;
Generieren einer Ausgangssignalsequenz durch Kombinieren der Detektorausgangssignale, die den hellen und dunklen Bereichen (2, 2^{*}, 3, 3^{*}) der beiden Gruppen entsprechen, und
Vergleichen der Ausgangssignalsequenz mit einer vorbestimmten Signalsequenz,
**dadurch gekennzeichnet, dass**
dieser kombinierende Schritt das Ermitteln der binären Ebene (Level) eines Detektors aufweist, wenn der andere Detektor einen Kantenübergang abtastet und umgekehrt und/oder Ermitteln von Kantenübergängen der wenigstens zwei Gruppen von dunklen und hellen Bereichen (2, 2^{*}, 3, 3^{*}).

2. Verfahren nach Anspruch 1, **dadurch gekennzeichnet, dass** jeder Detektor (8, 9) durch den anderen Detektor (8, 9) bei Ermittlung eines Kantenübergangs von einem der dunklen oder hellen Bereiche (2, 2^{*}, 3, 3^{*}) aktiviert wird.

3. Verfahren nach Anspruch 2, **gekennzeichnet durch** das Herstellen der Ausgangssignalsequenz **durch** die Ausgangssignale von jedem Detektor (8, 9), die Information über die dunklen und hellen Bereiche (2, 2^{*}, 3, 3^{*}) enthält, und das Aktivieren jedes Detektors (8, 9) **durch** den anderen Detektor (8, 9) nach dem Ermitteln einer Kante von einem der dunklen und hellen Bereiche (2, 2^{*}, 3, 3^{*}) **durch** den anderen Detektor (8, 9).

4. Verfahren nach einem der voranstehenden Ansprüche, **dadurch gekennzeichnet, dass** die Kantenübergänge der dunklen und hellen Bereiche (2, 2^{*}, 3, 3^{*}) auf dem Materialstreifen (30) so in Bezug auf ihre entsprechenden Detektoren (8, 9) ermittelt werden, dass wenn ein Detektor (8, 9) einen Kantenübergang ermittelt, der andere Detektor (8, 9) keinen Kantenübergang ermittelt.

5. Verfahren nach einem der voranstehenden Ansprüche, **gekennzeichnet durch** das Verwenden von binären Signalen als Ausgangssignale.

6. Verfahren nach Anspruch 5, **gekennzeichnet durch** das Darstellen der Ausgangssignale, die von der Ermittlung von dunklen Bereichen (2,3) und/oder von der Ermittlung von positiven Kanten von hellen zu dunklen Bereichen erhalten werden, jeweils **durch** eine "1", und Darstellen der Ausgangssignale, die von der Ermittlung von hellen Bereichen (2^{*}, 3^{*}) oder der Ermittlung von negativen Kanten von dunklen zu hellen Bereichen ermittelt werden, jeweils mit einer "0" oder umgekehrt.

7. Verwendung eines Materialstreifens (30) mit einem Muster (1), das wenigstens aus zwei Gruppen von dunklen und hellen Bereichen (2, 2^{*}, 3, 3^{*}) besteht, in dem Verfahren, das in den voranstehenden Ansprüchen beansprucht wird.

## Revendications

1. Méthode de vérification d'une forme (1) disposée sur une bande de matériau (30), laquelle forme (1) est constituée d'au moins deux groupes de zones sombres et claires (2, 2^{*}, 3, 3^{*}), ces zones sombres et claires se succédant dans la direction (v) de la vérification, la position des zones sombres (2) d'un groupe par rapport à un détecteur correspondant (9) étant déplacée par comparaison avec la position des zones sombres (3) de l'autre groupe par rapport à un autre détecteur correspondant (8), la dite méthode comprenant les opérations qui consistent
à détecter l'existence de zones sombres (2, 3) et de zones claires (2^{*}, 3^{*}) des deux groupes ;
à produire des signaux de sortie en fonction du résultat des détections ;
à créer une séquence de signaux de sortie en combinant des signaux de sortie de détecteur correspondant aux dites zones sombres et claires (2, 2^{*}, 3, 3^{*}) des deux groupes et à comparer la dite séquence de signaux de sortie à une séquence prédéterminée de signaux,
**caractérisée en ce que**,
la dite opération de combinaison entraîne la détermination du niveau binaire d'un détecteur lorsque l'autre détecteur capte une transition de bord et vice versa et/ou la détermination de transitions de bord des dits au moins deux groupes de zones sombres et claires (2, 2^{*}, 3, 3^{*}).

2. Méthode selon la revendication 1, **caractérisée en ce que**
chaque détecteur (8, 9) est activé par l'autre détecteur (8, 9) lors de la détection d'une transition de bord de l'une des dites zones sombres ou claires (2, 2^{*}, 3, 3^{*}).

3. Méthode selon la revendication 2,
**caractérisée par**
la création de la dite séquence de signaux de sortie par les signaux de sortie de chaque détecteur (8, 9), qui comprennent l'information concernant les dites zones sombres ou claires (2, 2^{*}, 3, 3^{*}), et l'activation de chaque détecteur (8, 9) par l'autre détecteur (8, 9) après la détection d'un bord d'une des dites zones sombres ou claires (2, 2^{*}, 3, 3^{*}) par l'autre détecteur (8, 9).

4. Méthode selon l'une des revendications précédentes,
**caractérisée en ce que**
les transitions de bord des dites zones sombres et claires (2, 2^{*}, 3, 3^{*}) sont détectées sur la dite bande de matériau (30) d'une façon telle par rapport à leurs détecteurs relatifs (8, 9) que, lorsqu'un détecteur (8, 9) détecte une transition de bord, l'autre détecteur (8, 9) ne détecte pas de transition de bord.

5. Méthode selon l'une des revendications précédentes,
**caractérisée par**
l'utilisation de signaux binaires pour constituer les dits signaux de sortie.

6. Méthode selon la revendication 5,
**caractérisée par**
la représentation des dits signaux de sortie, dérivés de la détection de zones sombres (2, 3) et/ou de la détection de bords positifs de zone claire à zone sombre, chacun par un « 1 » et la représentation des dits signaux de sortie, dérivés de la détection de zones claires (2^{*}, 3^{*}) et/ ou de la détection de bords négatifs de zone sombre à zone claire, chacun par « 0 », ou vice versa.

7. Utilisation d'une bande de matériau (30) avec une forme (1) constituée par au moins deux groupes de zones sombres et claires (2, 2^{*}, 3, 3^{*}) dans la méthode revendiquée dans l'une des revendications précédentes.
